# EUROPÄISCHE PATENTANMELDUNG

(11) **EP 1 685 999 A1**
(43) Veröffentlichungstag der Anmeldung: **02.08.2006**
(21) Anmeldenummer: 05027446.3
(22) Anmeldetag: 15.12.2005
(51) Int. Cl.: B60K 15/04

(54) **Auslaufstutzen für das Kraftstoffeinfüllrohr eines Kraftfahrzeuges**

(30) Priorität: 31.01.2005 DE 102005004551
(71) Anmelder: Kautex Textron GmbH & Co. KG., 53229 Bonn (DE)
(72) Erfinder: Kolberg, Ralf, 50321 Brühl (DE)
(74) Vertreter: Kierdorf, Theodor

(57) **Zusammenfassung**

Die Erfindung betrifft einen Auslaufstutzen (1) für das Einfüllrohr eines Kfz. Der Auslaufstutzen umfasst eine federbelastet in geschlossener Stellung gehaltene Rückschlagklappe (4), die schwenkbeweglich an der Mündung (3) des Stutzens angeschlagen ist, wobei die Rückschlagklappe (4) über wenigstens ein Dichtelement (17) mit einer umlaufenden Dichtlippe (19) gegen den Stutzen abgedichtet ist. Der Auslaufstutzen (1) zeichnet sich dadurch aus, dass sich die Dichtlippe (19) in Bezug auf den Querschnitt der Auslauföffnung radial auswärts erstreckt.

## Beschreibung

Die Erfindung betrifft einen Auslaufstutzen für das Einfüllrohr eines Kfz mit einer federbelastet in geschlossener Stellung gehaltenen Rückschlagklappe, die schwenkbar an der Mündung des Stutzens angeschlagen ist, wobei die Rückschlagklappe über ein Dichtelement mit einer umlaufenden Dichtlippe gegen den Stutzen abgedichtet ist.

Aus der DE 199 39 908 A1 ist ein Kraftstoffbehälter bekannt, bei welchem am behälterseitigen, in den Behälterinnenraum hineinragenden Ende des Einfüllrohrs eine Verschlussklappe schwenkbar angeordnet ist, die zwischen einer den Durchflussquerschnitt des Einfüllrohres absperrenden Schließstellung und einer diesen freigebenden Öffnungsstellung bewegbar ist. Die in Schließrichtung von einer Feder beaufschlagte Verschlussklappe ist von in den Behälter einströmenden Kraftstoff in ihre Öffnungsstellung schwenkbar. Die Verschlussklappe dient dazu, den so genannten "Spit-Back"-Effekt beim Betankungsvorgang des Kfz zu vermeiden. Dieser Effekt wird dadurch bewirkt, dass gegen Ende des Betankungsvorgangs wegen der Betätigung eines Betankungsentlüftungsventils der Tankinnendruck plötzlich ansteigt. Aufgrund dieses Druckanstiegs steigt Kraftstoff im Einfüllrohr nach oben und bewirkt ein Abschalten der Zapfpistole. Die Druckverhältnisse im Tankinnenraum am Ende der Betankungsphase können jedoch derart sein, dass der Kraftstoff aus dem Einfüllrohr herausspritzt. Dieser "Spit-Back"-Effekt tritt insbesondere bei der Betankung mit Diesel-Kraftstoff auf, da der Diesel-Kraftstoff zum Aufschäumen neigt.

Die in der DE 199 39 908 A1 beschriebene Verschlussklappe bzw. Rückschlagklappe soll, wie dort geschildert, die Funktion haben, ein Austreten des Kraftstoffs aus dem Kraftstoffbehälter in dem Fall zu vermeiden, wenn der tankaußenseitige Abschnitt des Einfüllrohrs bei einem Unfall durchtrennt wird. Einerseits soll eine Abdichtung gegen eine etwa von innen anstehende Kraftstoffsäule erzielt werden, andererseits soll die Rückschlagklappe bzw. Verschlussklappe durch den Druck des bei der Betankung einströmenden Kraftstoffs leicht zu öffnen sein.

Zur Abdichtung der Verschlussklappe wird in der DE 199 39 908 A1 ein Dichtring aus Elastomer-Material vorgeschlagen, der mit einer Dichtfläche mit einer im Wesentlichen linienförmigen Dichtkante auf der Stirnseite des Einfüllrohrs zusammenwirkt. Durch das Zusammenwirken der linienförmigen Dichtkante mit dem Dichtelement wird eine verhältnismäßig hohe Schließkraft zur Erzielung einer Abdichtung benötigt. Wünschenswert ist aber, wie vorstehend geschildert, auch eine zuverlässige Abdichtung bei geringer Schließkraft, was bei der Anordnung gemäß DE 199 39 908 wegen der dort zur Abdichtung benötigten verhältnismäßig hohen Flächenpressung zwischen Dichtelement und Dichtkante nur bei entsprechender Auslegung der die Rückschlagklappe in der geschlossenen Stellung haltenden Feder möglich ist. Hierdurch wird aber die Leichtgängigkeit der Rückschlagklappe bzw. das leichte Öffnen dieser aufgrund der Kraft des bei der Betankung einströmenden Kraftstoffs beeinträchtigt.

Die DE 200 01 334 U1 betrifft einen Auslaufstutzen mit den Merkmalen des Oberbegriffs von Anspruch 1. In dieser Veröffentlichung ist das Problem der Abdichtung der Rückschlagklappe bereits angesprochen, wobei die DE 200 01 334 U1 von einem am Stutzenende angeordneten Dichtungsring ausgeht, der eine die Stirnseite des Stutzens übergreifende, radial nach innen gerichtete Dichtlippe aufweist. Als nachteilhaft wird der Umstand beschrieben, dass sich in Anwesenheit von Kraftstoff der Innenrand der Dichtlippe in Umfangsrichtung wellt und sich deshalb teilweise von der Rückschlagklappe abhebt, so dass die Dichtlippe nicht vollständig abdichtend an der Rückschlagklappe anliegt. In der DE 200 01 334 U1 wird deshalb vorgeschlagen, am freien Innenrand der Dichtlippe einen sich axial in Richtung auf die Rückschlagklappe erstreckenden Dichtungssteg vorzusehen, an dem die Rückschlagklappe dann anliegt.

In Praxis hat sich eine derartige Gestaltung des Stutzens ebenfalls als nicht optimal erwiesen. Dem Verwellen der Dichtung in Anwesenheit von Kraftstoff, beispielsweise Kraftstoff mit hohem Alkohol-Anteil, wird nur teilweise entgegengewirkt. Der Schließdruck der Rückschlagklappe bzw. Ventilklappe muss so leicht eingestellt sein, dass auch bei verhältnismäßig geringem Betankungsvolumenstrom ein leichtes Öffnen der Klappe gewährleistet ist. Je nach Kraftstoffsorte und Verweildauer der Dichtung im Kraftstoff kann diese sich trotzdem verwellen, so dass eine linienförmige Anlage an der Dichtfläche nicht mehr gewährleistet ist.

Darüber hinaus wird der Druck einer auf der Rückschlagklappe anstehenden Flüssigkeitssäule sowohl axial als auch radial, so dass nicht auszuschließen ist, dass der radial einwirkende Flüssigkeitsdruck die Dichtung abheben kann. Zumindest wirkt der radiale Flüssigkeitsdruck gegen den von der Feder erzeugten Schließdruck der Rückschlagklappe, so dass auch aus diesem Grund eine linienförmige dichtende Anlage des Dichtelements an der Dichtfläche über einen längeren Zeitraum nicht gewährleistet werden kann.

Der Erfindung liegt daher die Aufgabe zugrunde, einen Auslaufstutzen für das Einfüllrohr eines Kfz der eingangs genannten Art hinsichtlich der Abdichtung zu verbessern.

Die Aufgabe wird durch einen Auslaufstutzen für das Einfüllrohr eines Kfz mit einer federbelastet in geschlossener Stellung gehaltenen Rückschlagklappe gelöst, die schwenkbar an der Mündung des Stutzens angeschlagen ist, wobei die Rückschlagklappe über ein Dichtelement mit einer umlaufenden Dichtlippe gegen den Stutzen abgedichtet ist, wobei der Auslaufstutzen sich dadurch auszeichnet, dass sich die Dichtlippe in Bezug auf den Querschnitt der Auslauföffnung radial auswärts erstreckt und die Dichtlippe gegen eine Dichtfläche der Rückschlagklappe anliegt.

Durch die erfindungsgemäße Gestaltung der Dichtung wird die Dichtwirkung bei auf der Rückschlagklappe anstehendem Systemdruck, sei es durch Überdruck im Behälter oder sei es durch eine anstehende Kraftstoffsäule, verstärkt.

Dies wird insbesondere dadurch erreicht, dass die Dichtlippe sich in Richtung auf die Rückschlagklappe tulpenförmig bzw. konisch öffnet. Ein Abheben der Dichtung durch radial auf diese einwirkenden Druck ist damit ausgeschlossen. Durch den in Schließrichtung der Rückschlagklappe wirkenden Druck wird die Dichtwirkung verstärkt, wobei der äußere Rand der Dichtlippe über den gesamten Druckbereich gegen die mit dieser zusammenwirkenden Dichtfläche der Rückschlagklappe angedrückt wird. Die Konfiguration der Dichtlippe gemäß der Erfindung hat außerdem den Vorteil, dass mechanische Beschädigungen der Dichtlippe bei Einführung eines Enttankungsschlauchs in das Einfüllrohr des Kfz zuverlässig vermieden werden.

Zweckmäßigerweise umfasst das Dichtelement einen Sockelring und eine sich von diesem erstreckenden Dichtlippe, wobei der Sockelring die Mündung des Stutzens umspannt.

Bei einer bevorzugten Variante des Auslaufstutzens gemäß der Erfindung bildet die Mündung des Stutzens einen Anschlag für die Rückschlagklappe derart, dass bei geschlossener, gegen den Anschlag anliegender Rückschlagklappe eine radial geöffnete Ringnut als Verformungswegspeicher für die Dichtlippe verbleibt. Auf diese Art und Weise werden wirksam Ermüdungserscheinungen oder eine mechanische Beeinträchtigung der Dichtlippe vermieden.

Vorzugsweise ist die Rückschlagklappe schwimmend gelagert, so dass diese sich auf der sich konisch öffnenden umlaufenden Dichtlippe selbst ausrichtet.

Hierzu ist es zweckmäßig, wenn die Rückschlagklappe in einem Scharnier gelagert ist, dessen Scharnierzapfen in Langlöchern beweglich gelagert sind.

Um einen möglichst gleichmäßigen Andruck der Rückschlagklappe gegen die Dichtung zu gewährleisten, wird die Rückschlagklappe vorzugsweise mittels einer Doppelschenkel-Feder in der geschlossenen Stellung gehalten.

Das Dichtelement kann über einen Haltering am Umfang des Stutzens festgelegt sein. Es ist dann zweckmäßig, wenn die Rückschlagklappe schwenkbeweglich an dem Haltering gelagert ist.

Besonders vorteilhaft ist es, wenn zwischen dem Haltering und dem Stutzen ein Nutkanal zur Aufnahme und Festlegung des Dichtelements gebildet wird.

Vorzugsweise ist der Sockelring des Dichtelements wulstförmig verdickt und bildet in dem Nutkanal eine Abdichtung zwischen dem Haltering und dem Stutzen.

Zur Bildung des zuvor erwähnten Anschlags für die Rückschlagklappe kann die Mündung des Stutzens in Strömungsrichtung des einzufüllenden Kraftstoffs über den Nutkanal zur Aufnahme des Dichtelements hervorstehen.

Bei einer besonders bevorzugten Ausgestaltung des Auslaufstutzens gemäß der Erfindung ist die Mündung des Auslaufstutzens in Bezug auf den der Rückschlagklappe gegenüberliegenden Anschluss des Stutzens exzentrisch angeordnet. So ist es möglich, den Auslaufstutzen mit einem gewissen Mindestinnendurchmesser in Abhängigkeit von dem maximal zulässigen Betankungsvolumenstrom auszugestalten, wobei gleichzeitig der Außendurchmesser ein vorgegebenes Maximum nicht überschreitet. Auf diese Art und Weise fügen sich die Rückschlagklappe, deren Aufhängung und der Haltering in den projizierten Durchmesser des Auslaufstutzens ein.

Die exzentrische Anordnung der Rückschlagklappe bezüglich des Stutzens hat auch den Vorzug, dass bei der Betankung geringere Druckverluste auftreten, da die Strömung in Öffnungsrichtung der Rückschlagklappe geleitet wird. Der Durchmesser der Rückschlagklappe mit Aufhängung ist nicht größer als der Stutzendurchmesser, somit wird die Montage begünstigt, d. h. das Einführen des Stutzens in die entsprechende Auskreisung am Kraftstoffbehälter.

Zum Schutz der Feder und des Scharniers vor und bei der Montage der Rückschlagklappe ist es vorteilhaft, wenn der Haltering ein Federgehäuse zur Aufnahme der die Rückschlagklappe in der geschlossenen Stellung haltenden Feder bildet.

Die Erfindung wird nachstehend anhand eines in den Zeichnungen dargestellten Ausführungsbeispiels erläutert.

Es zeigen:
- Fig. 1: eine perspektivische Ansicht des Auslaufstutzens gemäß der Erfindung,
- Fig. 2: eine Ansicht des Auslaufstutzens aus Fig. 1 in Richtung des mit II gekennzeichneten Pfeils,
- Fig. 3 a: eine Schnittansicht entlang der Linien III-III in Fig. 2 bei geschlossener Rückschlagklappe,

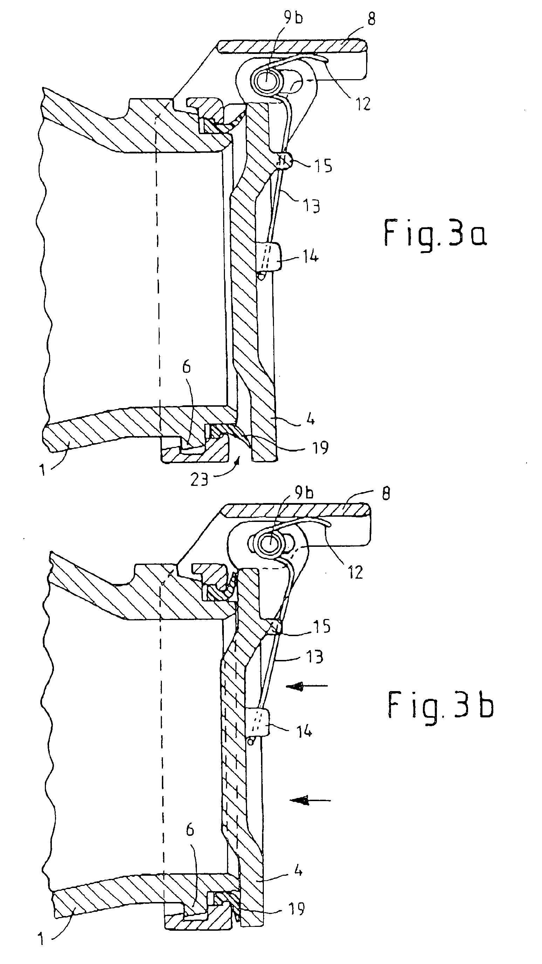

- Fig. 3 b: eine Schnittansicht entsprechend der in Figur 3 a gezeigten Schnittansicht bei gegen die Mündung des Anschlussstutzens angedrückter Rückschlagklappe,

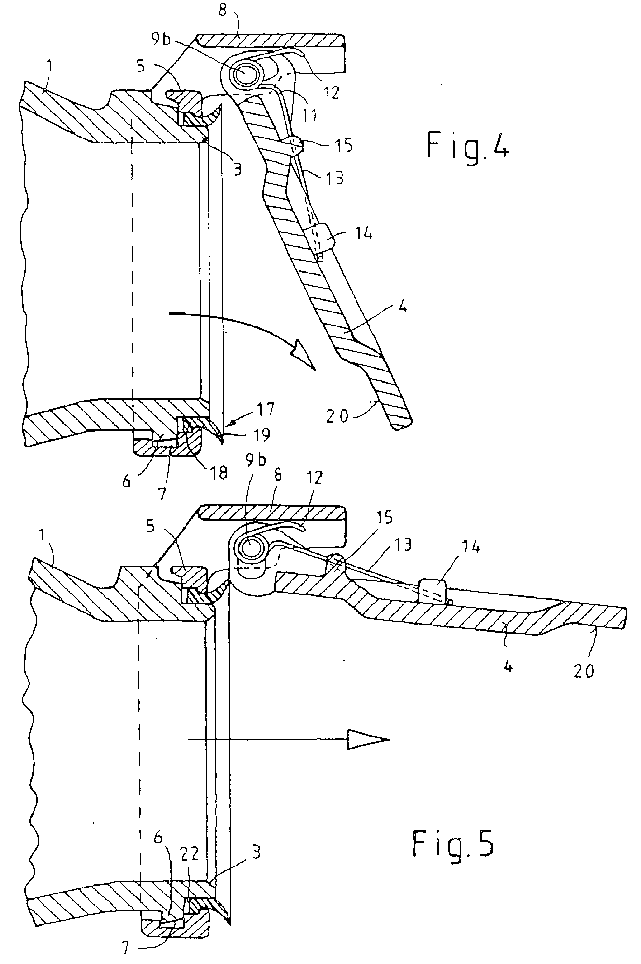

- Fig. 4 und 5: entsprechende Ansichten bei teilweise und vollständig geöffneter Rückschlagklappe und

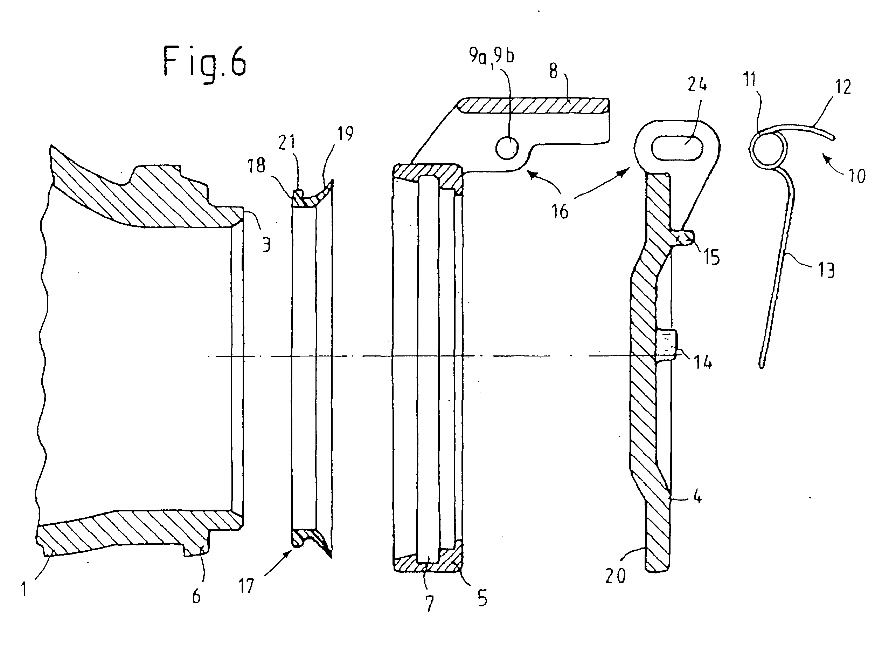

- Fig. 6: eine Explosionsansicht des Anschlussstutzens gemäß der Erfindung.

Der in Fig. 4 dargestellte Anschlussstutzen 1 ist in Verlängerung des auslaufseitigen Endes des Einfüllrohrs eines Kraftstoffbehälters für ein Kfz mit diesem Einfüllrohr verbunden. Das Einfüllrohr ist der Einfachheit halber nicht dargestellt.

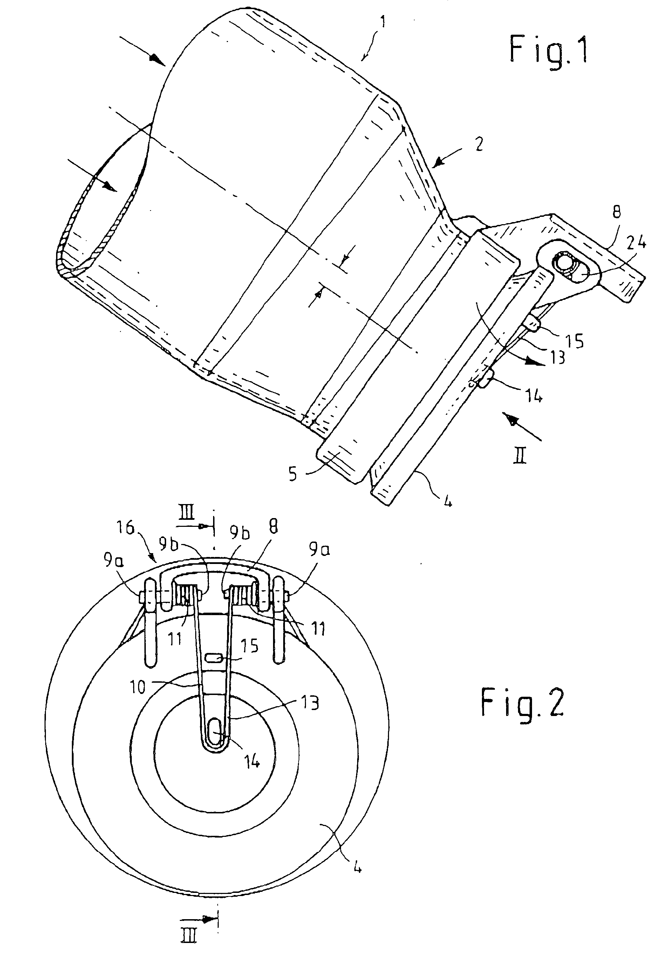

Wie beispielsweise der Fig. 1 zu entnehmen ist, ist der Anschlussstutzen 1 mit einem Mündungsbereich 2 versehen, dessen Durchtrittsquerschnitt verjüngt ist. Die Öffnung 3 (Mündung) des Anschlussstutzens 1 ist mit einer Rückschlagklappe 4 verschlossen. Die Rückschlagklappe 4 ist an einem als separates Bauteil ausgebildeten Haltering 5 schwenkbeweglich angeschlagen. Der Haltering 5 wiederum ist im Mündungsbereich 2 des Anschlussstutzens 1 mit diesem verrastet. Hierzu ist der Anschlussstutzen 1 mit einem umlaufenden Kragen 6 versehen (siehe Fig. 3 bis 6), welcher mit einer innen umlaufenden Rastnut 7 des Halterings 5 zusammenwirkt.

An den Haltering 5 ist ein mit 8 bezeichnetes Federgehäuse einteilig angeformt. Der Haltering 5 ist als Spritzgussteil ausgebildet. An die Flanken des Federgehäuses 8 sind, wie dies in Fig. 2 ersichtlich ist, jeweils beiderseits Zapfen 9a, 9b angespritzt, die einerseits als Scharnierzapfen 9a und andererseits als Haltezapfen 9b für eine Doppelschenkelfeder 10 dienen. Die Doppelschenkelfeder 10 ist mit ihren beiden gewickelten Schenkeln 11 auf die Haltezapfen 9b aufgesteckt und stützt sich mit ihren Armen 12 gegen das Innere des Federgehäuses 8 ab. Der Schwenkbügel 13 der Doppelschenkelfeder 10 ist wiederum gegen die Rückschlagklappe 4 in bekannter Art und Weise abgestützt und mittels eines Haltenocken 14 gegen Verrutschen gesichert. Zusätzlich sind die Schenkel 11 der Doppelschenkelfeder 10 über ein Spreizelement 15 so gesichert, dass sie nicht von den Haltezapfen 9b herunterrutschen können.

Das Scharnier 16 der Rückschlagklappe 4 umfasst zwei als Langlöcher ausgebildete Augen 24, in denen die Scharnierzapfen 9a beweglich gelagert sind, so dass die Rückschlagklappe 4 schwimmend gegen die Dichtlippe 19 des Anschlussstutzens 1 anliegt.

Zwischen der Rückschlagklappe 4 und der Mündung 3 des Anschlussstutzens 1 ist ein Dichtelement 17 angeordnet. Das Dichtelement 17 besteht aus einem wulstartig verdickten Sockelring 18 mit einer einstückig angeformten Dichtlippe 19. Die Dichtlippe 19 ist bezogen auf den Querschnitt der Öffnung 3 radial auswärts geneigt, d. h. diese erweitert sich konus- oder tulpenförmig in Richtung auf die Rückschlagklappe 4, so dass ein auf die Rückschlagklappe 4 wirkender Druck die Dichtwirkung der Dichtlippe 19 verstärkt. Die Dichtlippe 19 liegt bei verschlossener Rückschlagklappe gegen deren untere ebene Dichtfläche 20 an.

Wie vorstehend erwähnt, ist der Sockelring 18 mit einer wulstartigen Verdickung 21 versehen, die ebenfalls radial auswärts weist und in einem zwischen dem Haltering 5 und dem Anschlussstutzen 1 im Bereich der Mündung 3 desselben gebildeten Nutkanal 22 festgelegt ist. Das Querschnittsprofil des Halterings 5 ist so gewählt, dass der Nutkanal 22 in Richtung auf die Rückschlagklappe 4 verengt ist, so dass ein Herausrutschen des Sockelrings 18 des Dichtelements 17 aus dem Nutkanal 22 nicht möglich ist. Darüber hinaus dichtet die Verdickung 21 des Sockelrings 18, der die Mündung 3 des Anschlussstutzens 1 umspannt, den Zwischenraum zwischen Haltering 5 und Anschlussstutzen 1 gegen etwa eintretenden Kraftstoff ab.

Wegen der schwimmenden Lagerung der Rückschlagklappe 4 in dem Scharnier 16 kann sich die Rückschlagklappe 4 in dem sich tulpenförmig erweiternden Dichtsitz selbst ausrichten.

Um eine mechanische Überbeanspruchung der Dichtlippe 19 zu verhindern, ist der Haltering 5 gegenüber der Mündung 3 des Anschlussstutzens 1 zurückspringend angeordnet, so dass die Mündung 3 einen Anschlag für die Rückschlagklappe 4 bildet. Liegt die Rückschlagklappe 4 gegen den Anschlag an, wird ein radial umlaufender Spalt 23 als Verformungswegspeicher für die Dichtlippe 19 gebildet. Das Dichtelement 17 kann beispielsweise aus einem fluorierten Elastomer bestehen.

Wie der Figur 3 b zu entnehmen ist, bewirkt eine von der Tankinnenseite auf die Rückschlagklappe 4 einwirkende, erhöhte Kraft, dass diese mit der Dichtfläche 20 gegen das Dichtelement 17 gedrückt wird, wobei das Dichtelement 17 aufgrund dessen Verformung teilweise von dem Spalt 23 aufgenommen wird. Die Rückschlagklappe 4 liegt dabei gegen die Mündung 3 des Auslaufstutzens 1 an. Die Dichtlippe 19 liegt dabei über den gesamten Verformungsweg des Dichtelements 17 gegen die Dichtfläche 20 der Rückschlagklappe 4 an.

Wie dies Fig. 1 zu entnehmen ist, ist die Symmetrieachse des Mündungsbereichs 2 gegenüber der Symmetrieachse des übrigen Anschlussstutzens 1 versetzt, so dass die Mündung 3 des Anschlussstutzens 1 in Bezug auf den Querschnitt des Anschlussstutzens 1 bzw. in Bezug auf den Querschnitt des Einfüllrohrs exzentrisch angeordnet ist, so dass, wie dies aus der in Fig. 2 dargestellten Draufsicht ersichtlich ist, die Rückschlagklappe 4 mit Haltering 5, Federgehäuse 8 und Scharnier 16 einen Durchmesser aufweist, der ≤ dem Durchmesser des Anschlussstutzens 1 bzw. ≤ dem Durchmesser des Einfüllrohres ist. Hierdurch wird eine Montage des Einfüllrohrs in einem Kraftstoffbehälter aus Kunststoff durch eine dort ausgekreiste Montageöffnung vereinfacht.

Darüber hinaus begünstigt die beschriebene Geometrie des Mündungsbereichs 2 das Öffnen der Rückschlagklappe 4 aufgrund der eintretenden Kraftstoffströmung. Die Kraftstoffströmung ist nämlich auf der dem Scharnier 16 gegenüberliegenden Seite des Mündungsbereichs 2 nicht durch Versprünge gestört, so dass dort die volle Kraft des ungebremsten Kraftstoffstrahls zum Öffnen der Rückschlagklappe 4 genutzt werden kann.

### Bezugszeichenliste

- 1: Anschlussstutzen
- 2: Mündungsbereich
- 3: Mündung
- 4: Rückschlagklappe
- 5: Haltering
- 6: Kragen
- 7: Rastnut
- 8: Federgehäuse
- 9a: Scharnierzapfen
- 9b: Haltezapfen
- 10: Doppelschenkelfeder
- 11: Schenkel
- 12: Arme
- 13: Schwenkbügel
- 14: Haltenocken
- 15: Spreizelement
- 16: Scharnier
- 17: Dichtelement
- 18: Sockelring
- 19: Dichtlippe
- 20: Dichtfläche
- 21: Verdickung
- 22: Nutkanal
- 23: Spalt
- 24: Augen

## Patentansprüche

1. Auslaufstutzen für das Einfüllrohr eines Kfz mit einer federbelastet in geschlossener Stellung gehaltenen Rückschlagklappe (4), die schwenkbar an der Mündung (3) des Stutzens angeschlagen ist, wobei die Rückschlagklappe über ein Dichtelement (17) mit einer umlaufenden Dichtlippe (19) gegen den Stutzen abgedichtet ist, **dadurch gekennzeichnet, dass** sich die Dichtlippe (19) in Bezug auf den Querschnitt der Auslauföffnung radial auswärts erstreckt und die Dichtlippe (19) gegen eine Dichtfläche (20) der Rückschlagklappe (4) anliegt.

2. Auslaufstutzen nach Anspruch 1, **dadurch** g e - k e n n z e i c h n e t, dass das Dichtelement (17) einen Sockelring (18) und die sich von diesem erstreckende Dichtlippe (19) umfasst, wobei der Sockelring (18) die Mündung (3) des Stutzens umspannt.

3. Auslaufstutzen nach einem der Ansprüche 1 oder 2, d a - d u r c h **gekennzeichnet**, dass die Dichtlippe (19) sich in Richtung auf die Rückschlagklappe (4) tulpenförmig oder konusförmig öffnet.

4. Auslaufstutzen nach einem der Ansprüche 1 bis 3, d a - d u r c h **gekennzeichnet**, dass die Mündung (3) des Stutzens einen Anschlag für die Rückschlagklappe (4) bildet, derart, dass bei geschlossener, gegen den Anschlag anliegender Rückschlagklappe (4) ein radial geöffneter Spalt (23) als Verformungswegspeicher für die Dichtlippe (19) verbleibt.

5. Auslaufstutzen nach einem der Ansprüche 1 bis 4, d a - d u r c h **gekennzeichnet**, dass die Rückschlagklappe (4) schwimmend gelagert ist.

6. Auslaufstutzen nach einem der Ansprüche 1 bis 5, d a - d u r c h **gekennzeichnet**, dass die Rückschlagklappe (4) in einem Scharnier (16) gelagert ist, wobei die Scharnierzapfen (9a) in Langlöchern beweglich gelagert sind.

7. Auslaufstutzen nach einem der Ansprüche 1 bis 6, d a - d u r c h **gekennzeichnet**, dass die Rückschlagklappe (4) mittels einer Doppelschenkelfeder (10) in der geschlossenen Stellung gehalten wird.

8. Auslaufstutzen nach einem der Ansprüche 1 bis 7, d a - d u r c h **gekennzeichnet**, dass das Dichtelement (17) über einen Haltering (5) am Umfang des Stutzens festgelegt ist.

9. Auslaufstutzen nach Anspruch 8, **dadurch** g e - k e n n z e i c h n e t, dass die Rückschlagklappe (4) schwenkbeweglich an dem Haltering (5) gelagert ist.

10. Auslaufstutzen nach einem der Ansprüche 8 oder 9, d a - d u r c h **gekennzeichnet**, dass zwischen dem Haltering (5) und dem Stutzen ein Nutkanal (22) zur Aufnahme und Festlegung des Dichtelements (17) gebildet wird.

11. Auslaufstutzen nach Anspruch 10, **dadurch** g e - k e n n z e i c h n e t, dass die Mündung (3) des Stutzens in Strömungsrichtung des einzufüllenden Kraftstoffs über den Nutkanal (22) zur Aufnahme des Dichtelements (17) hervorsteht.

12. Auslaufstutzen nach einem der Ansprüche 1 bis 11, d a - d u r c h **gekennzeichnet**, dass die Mündung (3) des Auslaufstutzens (1) in Bezug auf den der Rückschlagklappe (4) gegenüberliegenden Anschluss des Stutzens exzentrisch angeordnet ist.

13. Auslaufstutzen nach einem der Ansprüche 8 bis 12, d a - d u r c h **gekennzeichnet**, dass der Haltering (5) ein Federgehäuse (8) zur Aufnahme der die Rückschlagklappe (4) in der geschlossenen Stellung haltenden Feder bildet.
